# EUROPÄISCHE PATENTSCHRIFT

(11) **EP 1 227 944 B1**
(45) Veröffentlichungstag und Bekanntmachung des Hinweises auf die Patenterteilung: **06.12.2006**
(21) Anmeldenummer: 00949321.4
(22) Anmeldetag: 12.07.2000
(51) Int. Cl.: B60C 23/06

(54) **MESSEINRICHTUNG UND SENSOR ZUR BERÜHRUNGSLOSEN MESSUNG VON REIFENKRÄFTEN**
MEASURING DEVICE AND SENSOR FOR CONTACTLESSLY MEASURING TIRE FORCES
DISPOSITIF DE MESURE ET DETECTEUR POUR MESURER SANS CONTACT LES FORCES AGISSANT SUR DES PNEUS

(30) Priorität: 06.08.1999 DE 19937078
(43) Veröffentlichungstag der Anmeldung: 07.08.2002
(73) Patentinhaber: Continental Teves AG & Co. oHG, 60488 Frankfurt (DE)
(72) Erfinder: MEINS, Jon, D-63303 Dreieich (DE)
(86) Internationale Anmeldenummer: PCT/EP2000/006642
(87) Internationale Veröffentlichungsnummer: WO 2001/011330

(56) Entgegenhaltungen:
- FR-A- 2 710 144

## Beschreibung

Die Erfindung betrifft ein Verfahren zur berührungslosen Erfassung der Ortsverschiebung eines Messpunktes in einem Reifen und einen Sensor sowie eine diesen verwendende Meßeinrichtung zur berührungslosen Messung von Kräften, die insbesondere während des Fahrbetriebs auf den Reifen des Rades ausgeübt werden. Wegen des immer dichter werdenden Verkehrs und der stärkeren Motorisierung von Fahrzeugen haben geregelte Eingriffe in das Bremsen - und Motorsystem aufgrund gemessener fahrzeugdynamischer Daten eine wachsende Bedeutung erlangt, da sich auf diese Weise in gewissen Grenzen Fehler im Fahrverhalten des Fahrzeuglenkers ausgleichen lassen. Für derartige Regelvorgänge spielen die auf das Fahrzeug und damit insbesondere die Reifen wirkenden Kräfte eine besondere Rolle. Während es an sich möglich ist, aufgrund des Drehverhaltens der Räder eines Fahrzeugs Rückschlüsse auf die fahrdynamischen Daten eines Fahrzeugs zu gewinnen, gehen neuere Entwicklungen dahin, die auf die Fahrzeugreifen wirkenden Kräfte zu messen, um eine für KFZ - Regelsysteme noch besser geeignete Eingangsgröße zu erhalten.

So ist es beispielsweise aus der DE-PS 39 37 966 bekannt, durch in den Reifen eingelagerte Sensoren, die auf den Reifen wirkenden Kräfte in allen drei Koordinaten zu messen. Die bekannte Lehre ist aufwendig und störanfällig. Nachteilig bei der bekannten Lösung ist weiterhin, daß die Montage des Reifens Schwierigkeiten bereitet, da die Sensorsignale vom Reifen zu einem Verstärker an der Felge transportiert und dann vom Verstärker an einen an der Felge angeordneten Sender gebracht werden müssen, von wo sie dann berührungslos zum Fahrzeugchassis übertragen werden. Die genannte Literaturstelle macht zur Art der Übertragung zwischen den Sensoren und dem Verstärker innerhalb des Reifens keine Aussage. Erfolgt eine derartige Übertragung im Inneren des Reifens mittels Leitungen, so ergeben sich bei der Reifenmontage Schwierigkeiten, da die Verbindungsleitungen zwischen den Sensor und dem Verstärker innerhalb des Reifens während der Montage nicht beschädigt werden dürfen.

Andererseits ist es aus der DE-OS 19744611 bekannt, den Abstand eines Meßpunktes an der Innenfläche eines Reifens von einem an der Felge angeordneten Sensor durch ein berührungslos arbeitendes Verfahren zu messen, um auf den Luftdruck im Reifen zu schließen.

Die Erfindung geht daher aus von einem Sensor gemäß dem Oberbegriff des Anspruchs 1 und hat sich zur Aufgabe gestellt, in einfacher Weise Querkräfte und Längskräfte am Reifen während des Fahrbetriebes zu messen, wobei die eingangs erwähnten Vorleistungen hinsichtlich in Reifen eingefügter Sensoren sowie die Schwierigkeiten bei der Montage des Reifens vermieden werden sollen.

Ein Verfahren gemäß dem Oberbegriff des Anspruchs 1 ist aus DE 197 44 611 bekannt.

Die Erfindung wird durch die sich aus dem kennzeichnenden Teil des Anspruchs 1 ergebende Merkmalskombination gelöst. Die Erfindung besteht im Prinzip also darin, mittels eines an der Felge angeordneten Sensors die Ortsverschiebungen von mindestens einem Meßpunkt am Reifen in Längsrichtung und insbesondere auch in Querrichtung zur Lauffläche des Reifens zu messen, woraus die Kräfte bestimmt werden können.

Hierdurch ergeben sich eine ganze Reihe von Vorteilen. Prinzipiell ist es nunmehr möglich Kräfte im Bereich der Aufstandsfläche berührungslos zu messen. Da der Sensor (bzw. die Sensoren) nicht in den Reifen eingebettet ist, ist der Sensor beim Austausch des Reifens nicht verloren. Durch die berührungslose Erfassung der Ortsverschiebung des Meßpunktes ergibt sich eine sehr viel leichtere Reifenmontage, da Verbindungskabel zwischen Reifen und Felge vermieden werden. Auch vor Beschädigungen aufgrund besonders starker Reifenverformungen (Fahren über Bordsteinkante, Reifenpanne) ist der Sensor weitgehend geschützt. Auch dürften die Vermeidung von Sensoren in der Lauffläche des Reifens sich positiv auf das Fahrverhalten des Reifens und dessen Belastungsfähigkeit auswirken.

Um den Sensor besonders geschützt anzubringen, empfiehlt sich in Weiterbildung der Erfindung die Merkmalskombination nach Anspruch 2. Die unmittelbare Befestigung des Sensors an der Felge schafft einen besonders stabilen Bezugspunkt. Es ist dabei nicht notwendig, daß der Sensor unmittelbar mit dem Felgenbett in Kontakt ist. Er kann auch auf einen an der Felge befestigten Fuß aufgesetzt sein, der radial nach außen ragt und somit einen geringeren Abstand zur Innenfläche des Reifens hat. Hierdurch können unter bestimmten Umständen genauere Messungen durchgeführt werden, da sich der vom Sensor aus gesehene maximale Verschiebungwinkel erheblich vergrößert. Auch kann durch die Verringerung des Abstands zwischen Sensor und Meßpunkt die Empfindlichkeit des Systems vergrößert werden, da sich die berührungslose Übertragungsstrecke für die verwendete Strahlung oder die eingesetzten elektromagnetischen Felder stark verkürzt.

Die universelle Verwendbarkeit des erfindungsgemäßen Sensors läßt sich noch durch die Merkmale nach Anspruch 3 erhöhen. Hierbei wird nicht nur in Längsrichtung (Umfangsrichtung) und Querrichtung der Lauffläche des Reifens, sondern auch (im wesentlichen) radial hierzu gemessen. Durch die auf diese Weise feststellbare Einfederung der Lauffläche des Reifens im Aufstandsbereich lassen sich wichtige fahrzeugdynamische Parameter wie beispielsweise Reifendruck, Belastung des Fahrzeugs, Stärke der Lauffläche und ähnliches zusätzlich bestimmen.

An sich kann der Meßpunkt an einer beliebigen Stelle des Reifens angeordnet sein, soweit nur sichergestellt ist, daß von dem Sensor Ortsverschiebungen des Meßpunktes in den gewünschten Richtungen erfaßt werden können. So kann beispielsweise zur Messung der Umfangsrichtung der Meßpunkt auch an der Seitenwand des Reifens angeordnet werden. Er muß sich auch nicht auf der Oberfläche von der Innenfläche des Reifens befinden, sondern kann auch in den Reifen eingelassen sein, soweit nur die Messung der Ortsverschiebung durch den Sensor sichergestellt ist.

Eine besonders einfache Messung wird in Weiterbildung der Erfindung allerdings durch die Anwendung der Merkmale nach Anspruch 4 erreicht. Setzt man den Meßpunkt auf die Innenfläche des Reifens, so kann er auch zu dem besonders einfach als passiver Geber ausgestaltet werden, der aufgrund einer von dem Sensor abgegebenen Strahlung diese Strahlung in geeigneter Weise zum Sensor reflektiert. Will man Querkräfte messen, so sollte der Meßpunkt sich unterhalb der Lauffläche des Reifens befinden, da hier die größten Bewegungen des Meßpunktes in Querrichtung auftreten.

Besonders genau werden die von dem Sensor erfaßten Ortsangaben des Meßpunktes, wenn er nach der in Anspruch 5 aufgeführten Weise arbeitet. Hierdurch wird der Meßpunkt in der gleichen Drehwinkellage des Rades gemessen, so daß Störgrößen wie beispielsweise Torsion in beiden Richtungen aufgrund des Reifenaufstandes, Schwingungsknoten im Reifen, Unwuchten und ähnliches durch Differenzbildung der Meßwerte eliminiert werden. Die Drehwinkellage läßt sich mit Hilfe der sogenannten Maximumbildung hinreichend genau bestimmen. Dabei wird bei der Verwendung z.B. nur eines einzigen Meßpunktes die Querverschiebung in x-Richtung und/oder die Abstandsänderung in z-Richtung (Einfederung) in gleichbleibenden Zeitabständen gemessen, die bei gleichbleibender Drehgeschwindigkeit gleichen Drehwinklabständen entsprechen. Durchläuft der Meßpunkt den Bereich der Aufstandsfläche so wird eine vergleichsweise große Änderung in z- und x-Richtung feststellbar sein, die zur Bestimmung des Maximums der Verschiebungen und damit der Drehwinkellage des Rades genutzt werden kann Es ist nicht notwendig, daß nur ein einziger Meßpunkt immer nur während einer ganz bestimmten Drehwinkellage in seinen Ortskoordinaten zu Bestimmung der wirkenden Kräfte erfaßt wird. Vielmehr kann der gleiche Meßpunkt (oder auch mehrere) nacheinander von einem einzigen oder mehreren Sensoren in unterschiedlichen Winkellagen vermessen werden. Dies kann beispielsweise wichtig sein, wenn man die Einfederung der Aufstandsfläche in Bezug setzen möchte zu dem Abstand des Meßpunktes ohne Einfederung oder die Querverschiebung des Meßpunktes in der Aufstandsfläche in bezug setzen möchte zu der Normallage des Meßpunktes außerhalb der Aufstandsfläche. In diesen Fällen ist daher die Anwendung der Merkmalskombination nach Anspruch 6 ausschließlich oder zusätzlich zu Messungen in anderen Drehwinkellagen besonders vorteilhaft. Die Verwendung nur eines einzigen Meßpunktes dürfte bei hohen Geschwindigkeiten (z.B. >50 km/Std) zu ausreichend genauen Meßergebnissen führen. Zur Messung bei niedrigeren Fahrgeschwindigkeiten und damit Drehgeschwindigkeiten des Rades wird es sich aber empfehlen, mehrere Sensoren an einer Felge einzusetzen, welche über den Umfang der Felge verteilt sind. Auf diese Weise können bei einer Radumdrehung mehrere Messungen im Bereich der Aufstandsfläche durchgeführt werden, der von den Meßpunkten der einzelnen Sensoren durchlaufen wird.

Die Messung wird besonders einfach durch die Ausgestaltung des Meßpunktes als aktiver, z.B. strahlender Geber. Hierbei kann es sich beispielsweise um eine optische oder akustische magnetischer oder elektromagnetische Strahlung bzw. Felder handeln. Auch eine kapazitive Messung kann sich empfehlen, soweit nur sichergestellt ist, daß auf diese Weise Ortsveränderungen in den gewünschten Richtungen über den Sensor erfaßt werden können. Zu bevorzugen ist allerdings gemäß einer Merkmalskombintation eine optische Strahlungsquelle unabhängig davon, ob der Strahler nun am Sensor oder im Meßpunkt angeordnet ist. Handelt es sich bei dem Meßpunkt um eine gebündelte optische Strahlungsquelle (strahlend oder reflektierend), so kann der Einfall der gebündelten Strahlung auf ein zu dem Sensor gehörendes Feld von optischen Sonden eine Möglichkeit sein, das Wandern des Meßpunktes in Längs- und/oder Querrichtung zur Reifenfläche zu erfassen. Der Sensor auf der Felge kann dabei eine Matrix aus strahlungsempfindlichen Sonden besitzen, die in Abhängigkeit von der Lage des Meßpunktes unterschiedlich angesprochen werden. Ein Meßpunkt in Form eines aktiven Gebers (Piezoelement; Kraftmeßdose) kann aber auch die Kraft in einer bestimmten Richtung oder mehrere Kräfte in unterschiedlichen Richtungen direkt messen und in verschlüsselter Form an den Sensor berührungslos übertragen. Durch geeignet geformte Blenden am Sensor, die in Abhängigkeit von der Lage des Geberstrahls eine unterschiedliche Strahlungsmenge zu dem Empfänger des Sensors durchlassen, kann ebenfalls die Änderung der Lage des Meßpunkts erfaßt werden.

Will man den reifenseitigen Aufwand hinsichtlich des Meßpunktes gering halten, so empfiehlt sich in Weiterbildung der Erfindung eine andere Merkmalskombination. Hierbei ist der Meßpunkt passiv ausgestaltet und die von dem Meßpunkt kommende Strahlung stellt einen (reflektierten) Anteil der von dem Sensor ausgestrahlten Strahlung dar. Bei einem derartigen Aufbau kann beispielsweise der reflektierte optischer Strahl durch die Verschiebung des Meßpunktes in Längs- und Querrichtung zur Lauffläche in seiner Lage oder Intensität geändert werden. Hierzu kann der Meßpunkt als spiegelnde Fläche ausgestaltet sein, wobei durch seitliche Verschiebungen dieser Fläche der reflektierte Strahl seine Intensität oder seine Winkelstellung (gegenüber dieser Fläche) wegen der gewölbten Reifeninnenfläche ändert, so daß die Änderung des Auftreffpunktes auf den Sensor ein Maß für die Verschiebung des Meßpunktes in den betrachteten Richtungen ist. Der aktive Strahl des Sensors kann aber auch vergleichbar mit der Abtastung einer Bildröhre einen vorgegebenen Bereich auf der Innenseite des Reifens systematisch abtasten und bei Auftreffen auf den Meßpunkt die augenblickliche Winkelstellung des Abtaststrahls festhalten und so die Lage des Meßpunktes bestimmen. Eine andere Möglichkeit besteht darin, die Bewegungsrichtung des Meßpunktes zu speichern und den Strahl auf diese Weise der Bewegung des Meßpunktes nachzuführen.

Die Ortsverschiebung des Meßpunktes läßt nur indirekt auf die auf den Reifen einwirkenden Kräfte schließen. Will man ein Signal erzeugen, welches den Zustand des Rades oder des Fahrzeugs hinsichtlich der Fahrzeugdynamik, also insbesondere hinsichtlich der auftretenden Bewegungsänderungen und Kräfte beschreibt, so kann man in vorteilhafter Weise von den Merkmalen nach Anspruch 7 Gebrauch machen. Hierbei wird eine Auswerteeinrichtung eingesetzt, welche aufgrund der Ausgangssignale des Sensors die gewünschten den Fahrzeugzustand kennzeichnenden Signale erzeugt. Diese hauptsächlich durch den Sensor und die Auswerteeinrichtung gebildete Meßeinrichtung kann entsprechend der in Anspruch 9 aufgeführten Merkmalskombination insgesamt ortsfest zur Felge, also insbesondere an der Felge selbst befestigt sein. Die Auswerteeinrichtung kann aber auch ortsfest gegenüber der Radachse, beispielsweise am Querträger, befestigt sein. Auf diese Weise stellt der Sensor die einzige Vorleistung an der Felge dar, so daß die Auswerteeinrichtung beim Felgenwechsel nicht ersetzt werden muß. Die Auswerteeinrichtung kann aber auch zentral auf dem Chassis montiert sein, so daß sie die Ausgangssignale mehrerer Sensoren (beispielsweise an den vier Rädern) gleichzeitig oder zyklisch nacheinander bedienen kann. Die Ausgangssignale des Sensors werden je nach den benötigten Ausgangsgrößen, z.B. für die Regelung der Fahrzeugdynamik, entsprechend der Merkmalskombination nach Anspruch 8 unterschiedlich verarbeitet, so daß die gewünschten Größen am Ausgang der Auswerteeinrichtung zur Verfügung stehen.

Eine gewisse Schwierigkeit bei der Übertragung der Ausgangssignale des Sensors oder der Auswerteeinrichtung stellt ggf. das Herausführen dieser Signale aus dem Reifeninneren durch die Felge, aber auch die Befestigung des Sensors bzw. der Auswerteeinrichtung an der Felge dar. Hierzu empfiehlt sich in Weiterbildung der Erfindung die Anwendung der Merkmalskombination nach Anspruch 10. Da das Ventil ohnedies eine Felgenöffnung benötigt und gleichzeitig eine Verbindung zwischen der Radumgebung zum Radinneren hin schafft, ist es vorteilhaft, den Sensor und/oder die Auswerteeinrichtung mit dem Ventil zu verbinden oder doch zumindest die genannten Baugruppen in der Nähe des Ventils anzuordnen. Auf diese Weise können über das Ventil leicht die Ausgangssignale in die Umgebung des Rades geführt werden. Ein weiterer großer Vorteil besteht darin, daß eindeutig ist, an welcher Stelle im Bereich der Felge sich der Sensor bzw. die Auswerteeinrichtung befindet. Es ist auf diese Weise sehr viel einfacher, den Reifen in der zweckmäßigen Winkellage auf die Felge zu montieren. Die winkelrichtige Montage des Reifens gegenüber der Felge und damit des Meßpunktes gegenüber dem Sensors läßt sich noch dadurch verbessern, daß der Reifen mit Markierungen versehen ist, die die richtige Einbaulage gegenüber der Felge kennzeichnen, wobei das Ventilloch an der Felge als zugeordnete Markierung an der Felge dienen kann. Die richtige Einbaulage des Reifens läßt sich noch durch einander zugeordnete Ausnehmungen bzw. Vorsprünge an Felge und Reifen sicherstellen, so daß der Reifen nur lagerichtig auf die Felge montiert werden kann.

Die Erfindung ist besonders für schlauchlose Reifen geeignet. Sie ist aber auch bei schlauchlosen Reifen einsetzbar, wobei an Stelle der Reifeninnenwand die Schlauchinnenwand tritt.

Ein Ausführungsbeispiel der Erfindung wird nachfolgend anhand der Zeichnung erläutert. Darin zeigt:
- Fig. 1: einen Schnitt durch ein Rad eines Kraftfahrzeugs, bei dem ein Reifen auf eine Felge aufgezogen ist und
- Fig. 2: ein Element des Reifenlatsches, in dem die Richtungen der auf den Reifen einwirkenden Kräfte eingezeichnet sind.

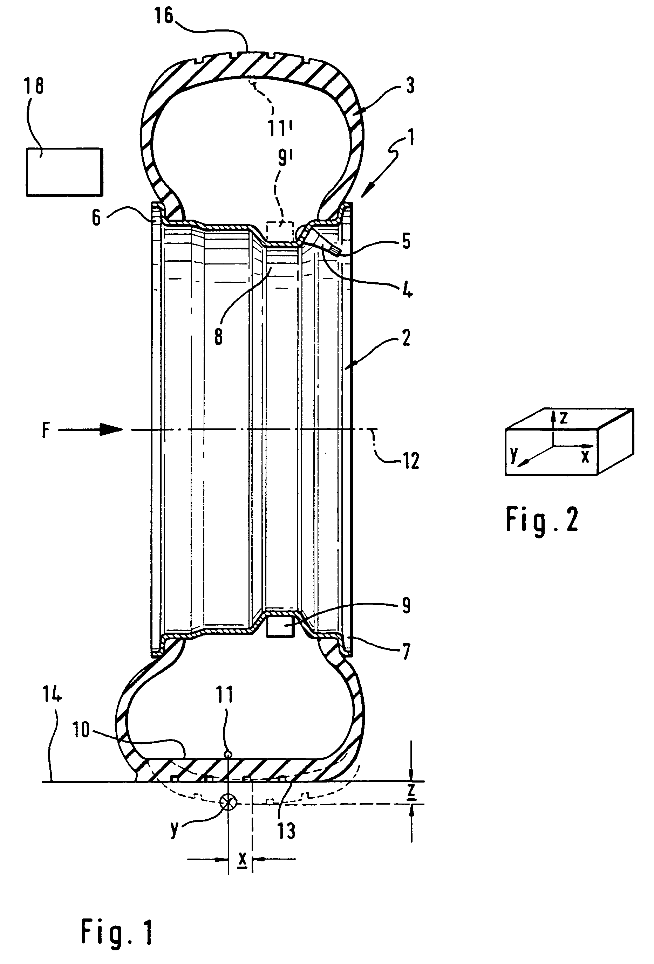

In Fig. 1 ist ein Rad 1 eines Kraftfahrzeugs in geschnittener Darstellung gezeigt, bei dem auf eine Felge 2 ein Reifen 3 schlauchlos montiert ist. Der Reifen wird über ein Ventil 4 aufgepumpt, welches mit einer Ventilkappe 5 verschlossen ist. Das Ventil befindet sich bevorzugt benachbart zum Sensor 9, ist aber aus Gründen der besseren Übersichtlichkeit seiner bevorzugten Stellung gegenüberliegend (180° versetzt) gezeichnet. Zwischen den Ventilhörnern 6,7 sitzt innen auf der Felge im Felgenbett 8 vorzugsweise in der Nähe des Ventils oder mit diesem einstückig vereint, ein Sensor 9. Dem Sensor gegenüberliegend befindet sich an der Innenfläche 10 des Reifens 3 ein Meßpunkt 11. Das Rad 1 dreht sich um eine Achse 12, wobei beispielsweise der Meßpunkt 11 aus der in Fig. 1 unten gezeigten Lage in die durch Strichlinien angedeutete Lage 11 in der oberen Hälfte von Fig. 1 sich bewegt. Es versteht sich von selbst, daß mit der Drehung der Felge Sensor, Reifen und Ventil sich mitdrehen, so daß auch der Sensor nach einer Raddrehung von 180° aus der unteren Hälfte von Fig. 1 in seine gestrichelt gezeichnete Position 9' wandert. Bekanntlich wird der Reifen aufgrund der in Richtung z (siehe Fig. 2) wirkenden Aufstandskraft in dem aufstehenden Bereich um einen Betrag z, eingedrückt, wie dies in Fig. 1 unten dargestellt ist. Die Größe der Einfederung hängt von dem Druck in dem Reifen, dem Reifentyp und der Belastung ab. Verläßt der Meßpunkt 11 die in Fig. 1 unten gezeigte Stellung, so federt der Reifen wieder aus und nimmt dann die in Fig. 1 oben gezeigte Lage ein. Vergleicht man also den Abstand zwischen Sensor 9 und Meßpunkt 11 in der in Fig. 1 unten und Fig. 1 oben gezeigten Lage, also im Abstand einer halben Radumdrehung, so kann man aufgrund der durch die Wegedifferenz gestellten Einfederung Rückschlüsse auf den Druck im Reifen, die Belastung und weitere Parameter ziehen.

Während der Drehung des Rades 1 wandert der Meßpunkt aber nicht nur in z-Richtung, sondern er kann bei auftretenden Seitenkräften auch in x-Richtung wandern, wie durch den Vergleich von Fig. 1 unten und Fig. 1 oben erkennbar ist. Wirkt beispielsweise eine Kraft F seitlich (beispielsweise über die Radachse 12) auf die Felge 2, so wird der Reifen wie in Fig. 1 unten dargestellt in x-Richtung um den Betrag x gegenüber der Lage des Sensors 9 ausgelenkt, wenn man unterstellt, daß die Aufstandsfläche 13 weitgehend fest auf der Oberfläche 14 der Fahrbahn haftet. Diese Verschiebung um den Wert x läßt sich durch den Sensor feststellen und ist ein Maß für die auf den Reifen seitwärts wirkende Kraft. Weiterhin kann sich aufgrund der Umfangskraft, die im Fahrbetrieb auf den Reifen wirkt, der Meßpunkt senkrecht zum Betrachter in y-Richtung verschieben (siehe Fig. 2), wobei diese Verschiebung in Fig. 1 unten durch eine auf den Betrachter gerichtete Pfeilspitze dargestellt ist. Auch diese Verschiebung läßt sich durch Vergleich mit einer Normallage des Meßpunktes 11 feststellen, wobei in dieser Normallage keine Traktionskräfte in y-Richtung stattfinden. Während aber die Verschiebung in x-Richtung hauptsächlich während des Aufstands des Reifens 3 auf der Fahrbahnfläche 14 erfolgt (das gilt auch für die maximale Einsenkung in z-Richtung), ist aufgrund der großen Festigkeit der Lauffläche 16 des Reifens 3 gegenüber den elastischeren Seitenflächen die Verschiebung in y-Richtung (Torsion gegenüber der Achse 12) über den gesamte Umfang des Rades weitgehend gleich, so daß es hier nicht unbedingt notwendig ist, die Verschiebung y bei dem in Fig. 1 unten gezeigten Zeitpunkt zu messen.

Für die Erfindung besonders wichtig ist es nun, daß die von dem Sensor 9 ausgehende Messung der Lageänderung des Meßpunktes 11 berührungslos geschieht, d.h. es gibt keine mechanischen Verbindungen zwischen dem Sensor 9 und dem Meßpunkt 11. Um dies zu erreichen, kann der Sensor 9 mit einem optischen Sender ausgestattet sein, dessen Strahlung von dem Meßpunkt 11 reflektiert wird. Die Änderung des von dem Meßpunkt 11 zurückgewordenen Strahls wird durch geeignete Detektoren am Sensor 9 festgestellt und ist ein Maß für die Verschiebung des Meßpunktes 11 in x-, y- und z-Richtung, wobei aufgrund dieser erfaßten Verschiebungen wieder auf die auf die Lauffläche wirkenden Kräfte geschlossen werden kann. Der Meßpunkt 11 kann aber auch mit einem optischen Sender versehen sein, der zum Sensor hin strahlt, wobei von dem Sensor die Lageänderung des Meßpunktes aufgrund des geänderten Zustands der vom Sensor erfaßten Strahlung festgestellt werden kann. Dabei kann der Sensor beispielsweise mit geeigneten optisch empfindlichen Zellen ausgestattet sein, welche matrixförmig angeordnet sind, so daß sich aufgrund der Wanderung des Strahls über die optisch empfindliche Matrix auf die Lageänderung des Meßpunktes 11 zumindest in x- und y-Richtung schließen läßt. Eine andere Möglichkeit kann darin bestehen, daß ein von dem Sensor 9 abgegebener Strahl die Reifeninnenfläche 10 abtastet und aufgrund einer besonderen (beispielsweise reflektierenden) Markierung des Meßpunktes 11 die Lage des Meßpunktes aufgrund eines empfangenden Reflexionsstrahls erfaßt und so die Verschiebung des Meßpunktes feststellt. In Fig. 1 ist noch eine Auswerteeinrichtung 18 angedeutet, welche die von dem Sensor erfaßten Verschiebungswerte auswertet und daraus die gesuchten Parameter errechnet, die beispielsweise die auf den Reifen wirkenden Kräfte, den Reifendruck, seine Umdrehungsgeschwindigkeit betreffen können, aber auch die Geschwindigkeit des Meßpunktes oder seine Beschleunigung. Es ist aber auch möglich, die Auswerteeinrichtung 18 neben dem Sensor 9 ebenfalls zwischen den Felgenhörnern 6, 7 auf der Felge im Reifeninneren anzuordnen. Die Ausgangssignale des Sensors bzw. der Auswerteeinrichtung können dann in an sich bekannter weise berührungslos in einen Empfänger am Fahrzeugchassis eingekoppelt werden, der beispielsweise mit einem Regler verbunden ist, welcher aufgrund der Ausgangssignale der Auswerteeinrichtung, die auf den Reifen wirkenden Kräfte durch Eingriff in das Motor- oder Bremsensystem beeinflußt. Der Sensor kann auch mit dem Ventil 9 (in Fig. 1 nicht gezeigt) einstückig vereint sein, so daß die Lage des Sensors auf der Felge festgelegt ist. Dabei kann das Ventil auch mit einer von dem Sensor 9 unabhängigen Druckmeßeinrichtung versehen sein, soweit nicht die Ausgangswerte des Sensors (z-Verschiebung des Meßpunktes 11) unmittelbar zur Druckermittlung ausgewertet werden.

## Patentansprüche

1. Verfahren zur berührungslosen Erfassung der Ortsverschiebung eines Messpunktes (11) an oder in einem Reifen (1) auf Grund einer auf den Reifen (3) eines Rades insbesondere während des Fahrbetriebes wirkenden Kraft (7) mittels eines Sensors (9), wobei der Sensor ortsfest zur Felge (2) des Rades fixiert ist, wobei eine Strahlungsquelle entweder im Sensor oder im Messpunkt angeordnet ist und der Messpunkt (11) eine aktive Strahlungsquelle oder einen passiven Strahlungsgeber besitzt, die/der eine vorzugsweise optische Strahlung abgibt, deren Zustandsänderung der Sensor (9) im Fahrzustand erfasst, oder wobei der Sensor (9) eine Strahlungsquelle besitzt und der Messpunkt (11) eine durch die Strahlung des Sensors (9) von der Umgebung unterscheidbare Markierung besitzt, **dadurch gekennzeichnet, dass** mittels des Sensors die Ortsverschiebung des Messpunktes (11) in Längs- und Querrichtung (y,x) zur Lauffläche des Reifens erfasst wird.

2. Verfahren nach Anspruch 1, **dadurch gekennzeichnet, dass** der Sensor (9) zwischen den Felgenhörnern (6,7) vorzugsweise im Felgenbett angeordnet ist.

3. Verfahren nach Anspruch 1 oder 2, **dadurch gekennzeichnet, dass** der sensor (9) zusätzlich den Abstand (12) des Messpunktes (11) vom Sensor (9) oder die Ortsverschiebung (z) des Messpunktes in radialer Richtung vorzugsweise im Fahrbetrieb erfasst.

4. Verfahren nach einem der vorangegangenen Ansprüche, **dadurch gekennzeichnet, dass** der Messpunkt (11) an der der Felge zugewandten Innenfläche (10) des Reifens (3) insbesondere im Bereich der Lauffläche (16) angeordnet ist.

5. Verfahren nach einem der vorangegangenen Ansprüche, **dadurch gekennzeichnet, dass** die Erfassung der Ortsverschiebung (x,y,z) mehrerer Messpunkte (11) immer bei der gleichen Drehwinkellage des Reifens erfolgt.

6. Verfahren nach einem der vorangegangenen Ansprüche, **dadurch gekennzeichnet, dass** die Ortsverschiebung (x,y,z) von dem Sensor (9) erfasst wird, während der Messpunkt den Bereich der Aufstandsfläche (13) durchläuft.

7. Messeinrichtung mit einem Sensor (9) zur Durchführung des Verfahrens nach einem der vorangegangenen Ansprüche, **dadurch gekennzeichnet, dass** die Messeinrichtung (9,18) eine Auswerteeinrichtung (18) besitzt, welche ortsfest gegenüber der Felge (2) und vorzugsweise innerhalb des Reifens (3) befindlich oder ortsfest gegenüber der Radachse (12) oder dem Fahrzeugchassis angeordnet ist, dass die Messeinrichtung so ausgelegt ist, dass der Sensor (9) die Ortsverschiebung des Messpunktes (11) in Längs- und Querrichtung (y,x) zur Lauffläche des Reifens erfasst und dass die Auswerteeinrichtung (18) Ausgangssignale des Sensors (9) aufnimmt und zu Ausgangssignalen der Auswerteeinrichtung verarbeitet, die den Zustand des Rades und/oder des Fahrzeugs insbesondere hinsichtlich der Fahrzeugdynamik beschreiben.

8. Messeinrichtung mit einem Sensor (9) nach Anspruch 7, **dadurch gekennzeichnet, dass** die Ausgangssignale der Auswerteeinrichtung (18) die auf den Reifen (3) wirkenden Längs - und/oder Querkräfte (y,x) und/oder Radialkräfte (z) und/oder die Rotationsgeschwindigkeit des Rades und/oder den Reifendruck und/oder die Verschiebung des Messpunktes (11) in eine oder mehrere Richtungen und/ oder die einfache oder mehrfache zeitliche Ableitung dieser Verschiebung beschreiben.

9. Messeinrichtung nach Anspruch 7 oder 8, **dadurch gekennzeichnet, dass** der Sensor (9) und/oder die Auswerteeinrichtung (18) im Bereich der Ventilöffnung an der Felge angeordnet ist, insbesondere mit dem Reifenventil (6) verbunden ist.

## Claims

1. Method of non-contact detection of the change in position of a measuring point (11) on or in a tire (1) due to a force (7) acting on the tire (3) of a wheel especially during driving by means of a sensor (9), with said sensor being in a fixed stationary position in relation to the rim (2) of the wheel, wherein a source of radiation is arranged either in the sensor or in the measuring point and wherein the measuring point (11) has an active source of radiation or a passive radiation generator emitting preferably optical radiation, the state change of which is detected by sensor (9) during driving, or wherein the sensor (9) has a source of radiation and the measuring point (11) has a marking that can be distinguished from its surroundings through the radiation of the sensor (9), **characterized in that** the sensor is used to detect the change in position of the measuring point (11) in the longitudinal and/or transverse direction (y,x) in relation to the running surface of the tire.

2. Method according to Claim 1, **characterized in that** the sensor (9) is arranged between the rim horns (6, 7) preferably in the rim base.

3. Method according to Claim 1 or 2, **characterized in that** the sensor (9) additionally detects the distance (12) between the measuring point (11) and the sensor (9) or the change in position (z) of the measuring point in the radial direction, preferably during driving.

4. Method according to one of the preceding claims, **characterized in that** the measuring point (11) is arranged on the inner surface (10) of the tire (3) facing towards the rim, in particular in the area of the running surface (16).

5. Method according to one of the preceding claims, **characterized in that** the change in position (x,y,z) of one or several measuring points (11) is always detected in the same angle-of-rotation position of the tire.

6. Method according to one of the preceding claims, **characterized in that** the change in position (x,y,z) is detected by the sensor (9) while the measuring point passes through the tire contact area (13).

7. Measuring device with a sensor (9) for implementing the method according to one of the preceding claims, **characterized in that** the measuring device (9,18) has an evaluation device (18) that is arranged in a stationary position in relation to the rim (2) and preferably within the tire (3) or in a stationary position in relation to the wheel axle (12) or the vehicle chassis, that the measuring device is designed in such a way that the sensor (9) detects the change in position of the measuring point (11) in the longitudinal and/or transverse direction (y, x) in relation to the running surface of the tire, and that the evaluation device (18) receives output signals of the sensor (9) and processes them into output signals of the evaluation device, which describe the state of the wheel and/or the vehicle, in particular regarding the vehicle dynamics.

8. Measuring device with a sensor (9) according to Claim 7, **characterized in that** the output signals of the evaluation device (18) describe the longitudinal and/or transversal forces (x, y) and/or radial forces (z) acting on the tire (3) and/or the rotational speed of the wheel and/or the tire pressure and/or the displacement of the measuring point (11) in one or several directions and/or the simple or multiple time derivative of this displacement.

9. Measuring device according to claim 7 or 8, **characterized in that** the sensor (9) and/or the evaluation device (18) is arranged near the valve opening on the rim, in particular is connected with the tire valve (6).

## Revendications

1. Procédé de détection sans contact du déplacement d'un point de mesure (11) sur ou dans un pneu (1) dû à une force (7) agissant sur le pneu (3) d'une roue, en particulier pendant la marche, au moyen d'un capteur (9), le capteur étant solidement fixé à la jante (2) de la roue, une source de rayonnement étant disposée soit dans le capteur, soit au point de mesure, et le point de mesure (11) possédant une source de rayonnement active ou un transmetteur de rayonnement passif, qui fournit un rayonnement de préférence optique dont le changement d'état est détecté par le capteur (9) à l'état de marche, ou le capteur (9) possédant une source de rayonnement et le point de mesure (11) possédant un marquage qui peut être distingué de l'environnement par le rayonnement du capteur (9), **caractérisé en ce qu'**au moyen du capteur le déplacement du point de mesure (11) est détecté dans la direction longitudinale (y) et la direction transversale (x) par rapport à la surface de roulement du pneu.

2. Procédé selon la revendication 1, **caractérisé en ce que** le capteur (9) est disposé entre les cornes de jante (6, 7) de préférence dans la base de jante.

3. Procédé selon la revendication 1 ou 2, **caractérisé en ce que** le capteur (9) détecte en outre la distance (12) du point de mesure (11) au capteur (9), ou le déplacement (z) du point de mesure dans la direction radiale, de préférence pendant la marche.

4. Procédé selon l'une des revendications précédentes, **caractérisé en ce que** le point de mesure (11) est disposé sur la surface intérieure (10) tournée vers la jante, du pneu (3), en particulier dans la zone de la surface de roulement (16).

5. Procédé selon l'une des revendications précédentes, **caractérisé en ce que** la détection du déplacement (x, y, z) de plusieurs points de mesure (11) s'effectue toujours dans la même position angulaire de rotation du pneu.

6. Procédé selon l'une des revendications précédentes, **caractérisé en ce que** le déplacement (x, y, z) est détecté par le capteur (9), pendant que le point de mesure traverse la zone de la surface d'appui (13).

7. Dispositif de mesure comportant un capteur (9) pour la mise en oeuvre du procédé selon l'une des revendications précédentes, **caractérisé en ce que** le dispositif de mesure (9, 18) possède un dispositif de traitement (18) qui est disposé de manière fixe quelque part sur la jante (2) et de préférence à l'intérieur du pneu (3), ou de manière fixe sur l'essieu (12) ou le châssis du véhicule, **en ce que** le dispositif de mesure est conçu de manière que le capteur (9) détecte le déplacement du point de mesure (11) dans la direction longitudinale (y) et dans la direction transversale (x) par rapport à la surface de roulement du pneu, et **en ce que** le dispositif de traitement (18) reçoit des signaux de sortie du capteur (9) et les traite en signaux de sortie du dispositif de traitement qui décrivent l'état de la roue et/ou du véhicule, en particulier en ce qui concerne la dynamique du véhicule.

8. Dispositif de mesure avec un capteur (9) selon la revendication 7, **caractérisé en ce que** les signaux de sortie du dispositif de traitement (18) décrivent les forces longitudinales (y) et/ou forces transversales (x) agissant sur le pneu (3) et/ou les forces radiales (z) et/ou la vitesse de rotation de la roue et/ou la pression du pneu et/ou le déplacement du point de mesure (11) dans une ou plusieurs directions et/ou la dérivée temporelle dans le temps, simple ou multiple, de ce déplacement.

9. Dispositif de mesure selon la revendication 7 ou 8, **caractérisé en ce que** le capteur (9) et/ou le dispositif de traitement (18) sont disposés dans la zone de l'ouverture de valve sur la jante, et en particulier relié avec la valve (6) du pneu.
